# EUROPÄISCHE PATENTSCHRIFT

(11) **EP 0 886 088 B1**
(45) Veröffentlichungstag und Bekanntmachung des Hinweises auf die Patenterteilung: **02.02.2005**
(21) Anmeldenummer: 98110588.5
(22) Anmeldetag: 09.06.1998
(51) Int. Cl.: F16J 15/34

(54) **Diagnosesystem für Gleitringdichtung**
Diagnostic system for mechanical seal
Système de diagnostic pour garniture mécanique d'étanchéité

(30) Priorität: 09.06.1997 DE 19724308
(43) Veröffentlichungstag der Anmeldung: 23.12.1998
(73) Patentinhaber: Burgmann Dichtungswerke GmbH & Co. KG, 82515 Wolfratshausen (DE)
(72) Erfinder: Bareis, Markus, 86946 Vilgertshofen (DE); Svejkovsky, Reinhard, 82538 Geretsried (DE); Nosowicz, Josef, Dr., 82538 Geretsried (DE)
(74) Vertreter: Schmidt, Horst, Dr.

(56) Entgegenhaltungen:
- EP-A- 0 185 134
- GB-A- 2 115 504
- US-A- 4 691 276

## Beschreibung

Die Erfindung betrifft ein Verfahren zum Ermitteln der Ausfallwahrscheinlichkeit und/oder der theoretischen Restlebensdauer einer Gleitringdichtung.

Gleitringdichtungen sind zur Abdichtung zwischen einem rotierenden und einem stationären Bauteil insbesondere bei Pumpen allgemein bekannt. Zwischen den beiden Gleitringen bildet sich im Betrieb ein Dichtspalt mit einem flüssigen oder gasförmigen Schmierfilm aus, so dass die Dichtung berührungsfrei und verschleißarm arbeitet.

Dennoch ist die Lebensdauer einer Gleitringdichtung beschränkt. Vom Sollzustand abweichende Betriebsparameter können zu einer verstärkten Verkürzung der Lebensdauer oder zum Versagen der Gleitringdichtung führen. Insbesondere ein plötzlicher unvorhersehbarer Ausfall der Dichtung kann Beschädigungen der gesamten Maschine hervorrufen und somit eine erhebliche Gefahrenquelle bedeuten. Auch kann ein Abschalten der gesamten Vorrichtung oder Anlage erforderlich werden, was erhebliche Unkosten bedeutet.

Bisher wurden auftretende Schäden an Gleitringdichtungen ausschließlich an extremer Leckage erkannt, wenn es häufig bereits zu spät war, um geeignete Maßnahmen zur Verhinderung der vorstehenden Beschädigungen und/oder Gefahren ergreifen zu können.

So offenbaren beispielsweise die EP 0 185 134 A und die GB 2 115 504 A jeweils Gleitringdichtungen, bei denen ein Verfahren zum Einsatz kommt, das erst nach.einem bereits eingetretenen Verschleiß ein entsprechendes Signal erzeugt. Hierbei wird in der GB 2 115 504 A dieses Signal sogar erst dann erzeugt, wenn schon eine Undichtigkeit vorliegt, d.h. erst dann, wenn das abzudichtende Medium bereits austritt und die Funktion der Gleitringdichtung nicht mehr gewährleistet werden kann. Dies stellt einen erheblichen Nachteil dieser bekannten Gleitringdichtungen bzw. der hierbei angewendeten Verfahren dar, da es hierbei gegebenenfalls zu Folgeschäden in dem System kommen kann, in dem die Gleitringdichtung eingesetzt ist.

Aus der DE 42 25 642 C1 ist ferner eine Turbomaschine mit axialer Trockengas-Gleitringdichtung bekannt, bei der die Leckage der Dichtung durch eine Stauvorrichtung gestaut und der Staudruck von einem Drucküberwachungsgerät überwacht wird. Wenn der Staudruck ein vorgegebenes Maß überschreitet wird ein Alarmsignal ausgelöst, das auf einen möglichen oder auf einen beginnenden Defekt der Gleitringdichtung hinweist, oder die Turbomaschine wird automatisch ohne Verzögerung abgeschaltet. Es handelt sich hierbei um ein reines Überwachungsverfahren für nur einen einzigen Betriebsparameter. Zwar kann der Leckagedruck einen für einen möglichen Ausfall der Gleitringdichtung relevanten Betriebsparameter darstellen, jedoch ist er im vergleich zu anderen Betriebsparametern allenfalls von untergeordneter Bedeutung. Für eine zuverlässige Vorhersage der Ausfallwahrscheinlichkeit bzw. der Restlebensdauer kann er alleine nicht herangezogen werden. Eine Ermittlung der Wahrscheinlichkeit für einen Ausfall der Gleitringdichtung oder sogar die Ermittlung der theoretischen Restlebensdauer der Gleitringdichtung ist daher mit der aus der DE 42 25 642 C1 bekannten Vorrichtung nicht oder allenfalls mit einer unzureichenden Genauigkeit möglich.

Aufgabe der Erfindung ist es daher, ein Verfahren der eingangs genannten Art bereitzustellen. Dieses Verfahren soll bei einfacher Durchführbarkeit eine hohe Vorhersagegenauigkeit aufweisen und eine frühzeitige Erkennung von Risiken ermöglichen. Dabei soll schon vor einem tatsächlich eingetretenen Verschleiß und besonders auch schon vor einer Funktionsuntüchtigkeit ein Signal bezüglich der Ausfallwahrscheinlichkeit und/oder der Restlebensdauer einer Gleitringdichtung generiert werden können.

Diese Aufgabe wird erfindungsgemäß durch ein Verfahren gemäß Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass der Druck des Mediums und die Temperatur des Mediums, sowie insbesondere die Temperatur von Elementen der Gleitringdichtung und/oder insbesondere der Leckagedruck und/oder insbesondere die Feuchtigkeit auf der dem Medium abgewandten Seite der Gleitringdichtung gemessen werden, dass die Messwerte mit bekannten Vergleichswerten verglichen werden, und dass aus der Abweichung der gemessenen Werte von den bekannten Vergleichswerten die Ausfallwahrscheinlichkeit und/oder die verbleibende Restlebensdauer errechnet wird, wobei die Ausfallwahrscheinlichkeit erhöht bzw. die Restlebensdauer stärker als die tatsächliche Betriebszeit verringert wird, wenn ein Messwert die Vergleichswerte überschreitet oder wenn ein Messwert sich den Vergleichswerten annähert.

Im Gegensatz zu vorbekannten Überwachungsverfahren werden also bei dem erfindungsgemäßen Verfahren mindestens zwei Betriebsparameter gemessen, nämlich der Druck des Mediums und die Temperatur des Mediums. Diese gemessenen Parameter werden dann in der genannten Art und Weise ausgewertet.

Dabei kann die Lebensdauer um die tatsächliche Betriebszeit der Gleitringdichtung vermindert werden, wenn alle gemessenen Werte im Sollbereich liegen. Sobald jedoch mindestens ein Messwert die Vergleichswerte überschreitet wird die Lebensdauer beschleunigt vermindert. Dazu kann die tatsächliche Betriebszeit in diesem schädlichen Betriebszustand um einen vorbestimmten Faktor erhöht von der Lebensdauer der Gleitringdichtung abgezogen werden.

Bei dem erfindungsgemäßen Verfahren ist es für die Erhöhung der Ausfallwahrscheinlichkeit bzw. für die im Vergleich zur tatsächlichen Betriebszeit verstärkte Verringerung der Restlebensdauer nicht unbedingt erforderlich, dass mindestens ein Vergleichswerte von einem Messwert überschritten wird, sondern es reicht bereits aus, wenn ein Messwert sich einem Vergleichswert annähert.

Der wesentliche Vorteil des erfindungsgemäßen Verfahrens besteht darin, dass mögliche Ausfälle höchst zuverlässig und rechtzeitig vorher erkennbar sind. Daher können drohende Leckagen mit einer hohen Vorhersagegenauigkeit früh genug erkannt und gegebenenfalls schwerwiegende Folgeschäden in dem System, in dem die Gleitringdichtung eingesetzt ist, vermieden werden.

Zusätzlich kann auch der Verschleiß der Dichtflächen der Gleitringe gemessen werden und diese Messwerte können in vorteilhafter weise ebenfalls zur Ermittlung der Ausfallwahrscheinlichkeit bzw. der verbleibenden Restlebensdauer miteinbezogen werden. Eine Möglichkeit zum Erfassen des Verschleißes ist als solche aus der DE 34 26 539 A1 bekannt.

Besonders vorteilhaft ist es außerdem, wenn die Ausfallwahrscheinlichkeit überproportional erhöht bzw. die Restlebensdauer überproportional stärker als die tatsächliche Betriebszeit verringert wird, wenn zeitgleich mehrere Messwerte die Vergleichswerte überschreiten. Dabei wird die Lebensdauer mehrfach beschleunigt vermindert.

Für eine besonders einfache Durchführung des Verfahrens ist es dabei vorteilhaft, wenn die Messwerte periodisch erfasst werden. Dabei können die Messabstände sehr kurz, insbesondere zwischen 1 bis 2 Sekunden gehalten sein, so dass die Messwerterfassung quasi-kontinuierlich erfolgt.

Auf diese Weise kann nicht nur die theoretische Restlebensdauer ermittelt werden, sondern es ist auch möglich, die aktuellen Messwerte und das daraus resultierende Risiko des Ausfalls der Gleitringdichtung jederzeit zu ermitteln und anzuzeigen. Der Zustand der Gleitringdichtung wird dazu permanent erfasst und überwacht. So sind insbesondere auch Revisionen vorhersehbar und besser planbar. Auch können bei zentraler Überwachung Kontrollen vor Ort entfallen. Um eine möglichst exakte Vorhersage zu erhalten, können die Wechselwirkungen der einzelnen Messgrößen in die Auswertung mit einbezogen werden.

Vorteilhaft ist es ferner, wenn die Messdaten in einem Datenspeicher speicherbar und abrufbar sind. Dabei können die Messdaten vorzugsweise in Abhängigkeit von der Zeit, in Abhängigkeit von den Betriebsstunden oder nach bestimmten Messwertbereichen gestaffelt gespeichert oder ausgegeben werden.

Zusätzliche Sicherheit kann dadurch erreicht werden, dass dann, wenn die Ausfallwahrscheinlichkeit einen vorbestimmten Wert überschreitet oder die verbleibende Restlebensdauer einen vorbestimmten Wert unterschreitet, das die Gleitringdichtung enthaltende Aggregat oder System automatisch abgeschaltet wird.

Das erfindungsgemäße Verfahren kann leicht mit einer entsprechenden und einfach aufzubauenden Vorrichtung durchgeführt werden. Dabei kann das Diagnosesystem vorteilhafterweise als Meßsystem in die Gleitringdichtung integriert werden, wobei das Übermitteln der Messwerte drahtlos per Funk erfolgen kann, wenn an den Sensoren Sendeelemente und an einer Auswerte- bzw. Anzeigeeinheit ein Empfangselement vorgesehen ist. In einer Auswerte- bzw. Anzeigeeinheit können die Messwerte beispielsweise nach bestimmten Messwertbereichen gestaffelt oder in Abhängigkeit von der Zeit oder von den Betriebsstunden gespeichert bzw. angezeigt werden.

Weitere Vorteile und Merkmale der Erfindung ergeben sich aus der nachfolgenden Beschreibung und den in den Zeichnungen dargestellten Ausführungsbeispielen.

Darin zeigen:
- Figur 1:: Gleitringdichtung mit vier Sensoren,
- Figur 2:: Verknüpfungsdiagramm der Messgrößen.

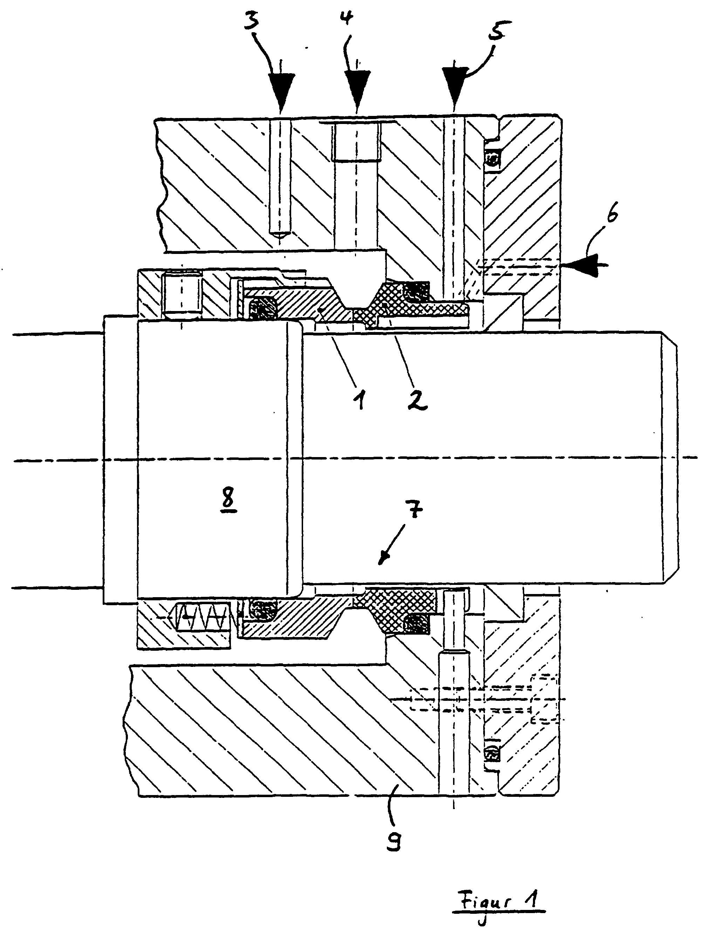

In Figur 1 ist eine Gleitringdichtung 7 mit vier Sensoren 3, 4, 5 und 6 dargestellt. Die Gleitringdichtung 7 weist zwei Gleitringe 1 und 2 auf und dichtet die Welle 8 eines nicht näher dargestellten Aggregats gegen das Gehäuse 9 ab.

Dabei werden folgende Parameter kontinuierlich erfasst: Die Mediumstemperatur 3 an der Dichtung 7, der Mediumsdruck 4 an der Dichtung 7, die Gegenringtemperatur 6 im Bereich der Gleitfläche des stationären Gleitrings 2 sowie der Leckagedruck 5.

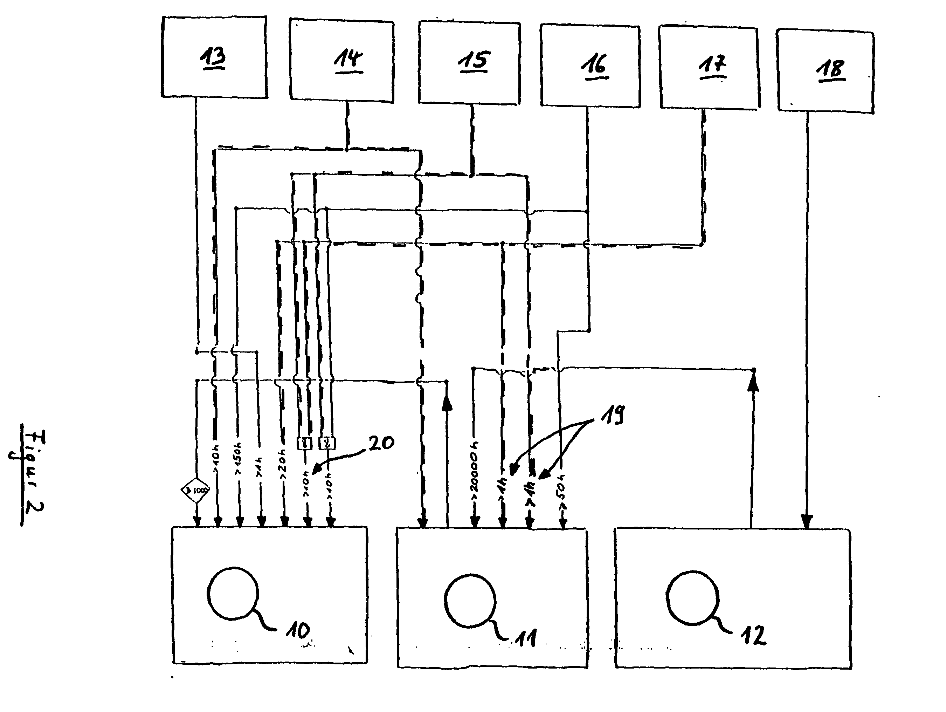

Die ermittelten Betriebsdaten werden entsprechend Figur 2 verknüpft und in Beziehung zueinander gesetzt. Daraus werden die Zeitwerte für die Verkürzung der Restlebensdauer der Gleitringdichtung ermittelt.

In Figur 2 sind sechs mögliche Betriebszustände 13 und 18 dargestellt, die einzeln oder zusammen vorliegen können. Zustand 18 stellt dabei den störungsfreien Normalbetrieb dar. Die Betriebszustände 13 bis 17 stellen das Überschreiten bestimmter Betriebsparameter über die maximal zulässigen Abweichungen und somit sogenannte Stressfaktoren dar. Im einzelnen bedeuten die Zustände 13 bis 17, dass die nachfolgend angegebenen Betriebsparameter die vorbestimmten Vergleichswerte um mehr als die beispielhaft angegebenen Differenzen abweichen:
- Zustand 13:: Die Temperatur des Mediums liegt über 180° C,
- Zustand 14:: Die Temperatur des stationären Gleitringes 2 liegt oberhalb der Vergleichstemperatur
- Zustand 15:: Die Differenz zwischen der Temperatur des Mediums und der Temperatur des Gleichringes 2 liegt über 40K,
- Zustand 16:: Der Druck des Mediums liegt über 20 bar,
- Zustand 17:: Der Druck des Mediums (Wasser) liegt unterhalb des Dampfdruckes.

Je nach Betriebsparametern wie Medienart, Druck, Temperatur und anderen Größen ist eine bestimmte Lebenserwartung der Gleitringdichtung gegeben. Bei normalen, der Auslegung entsprechenden Bedingungen (alle Messgrößen im Sollbereich) können das z.B. 25000 Stunden sein. Nach dieser Zeit wäre aufgrund des natürlichen Verschleißes ein Austausch der Gleitringe und Nebendichtungen erforderlich. Ändern sich aber während des Betriebes die Bedingungen und führen diese zu erhöhtem Mediumsdruck, Mediumstemperatur und in der Folge zu mehr Leckage oder zu erhöhter Temperatur an den Gleitflächen, reduziert sich die Lebenserwartung bzw. Betriebsdauer der Gleitringdichtung.

Läuft die Dichtung bei normalen Bedingungen innerhalb der zugestandenen Toleranzen, also im Sollbereich der Messgrößen, werden die Betriebsstunden addiert und die Restlebensdauer angezeigt. Ein grünes Leuchtsignal 12 zeigt den Normalbetrieb an. Bei etwa 80 % der zu erwartenden Lebensdauer der Gleitringdichtung 7 schaltet das Leuchtsignal von Grün auf Gelb. Das gelbe Leuchtsignal 11 warnt, dass ein Schaden der Gleitringdichtung 7 möglich ist. Hierbei werden die Betriebsstunden gezählt, in denen die Gleitringdichtung in diesem Warnungszustand läuft. Bei Überschreiten einer vorbestimmten Anzahl der Betriebsstunden im Warnungszustand, z.B. über 1000 Stunden, schaltet das Leuchtsignal von Geld auf Rot. Ein rotes Leuchtsignal 10 zeigt an, dass eine Störung vorliegt und ein Schaden der Gleitringdichtung 7 wahrscheinlich ist.

Ein Beispiel aus Figur 2 soll die Verknüpfungen der Messwerte verdeutlichen. Sinkt beispielsweise der Druck 4 des Mediums Wasser unter den Dampfdruck (=Zustand 17), was die Gefahr eines Trockenlaufes bedeutet, und steigt die Gegenringtemperatur 6 auf 40K über Mediumstemperatur (= Zustand 15), so wird nach einer Stunde (Pfeile 19) durch Einschalten des gelben Signals 11 eine Warnung ausgegeben. Die angezeigte Restlebensdauer sinkt dabei sehr schnell ab, da sie sehr viel stärker als die tatsächliche Betriebszeit verringert wird. Verändern sich die Messgrößen noch mehr ins Negative oder dauert der Zustand mehr als zehn Stunden an (Pfeil 20), wird das rote Warnsignal 10 eingeschaltet, um anzuzeigen, dass ein Eingreifen spätestens jetzt erforderlich ist, um größeren Schaden an Dichtung 7 und Aggregat zu vermeiden. Auch könnte das Aggregat in diesem Fall automatisch abgeschaltet werden.

Bevorzugte Anwendungsgebiete des Diagnosesystems für Gleitringdichtungen könne Heißwasserpumpen in Haus- und Versorgungstechnik, in Kraftwerkstechnik und Chemie sein.

## Patentansprüche

1. Verfahren zum Ermitteln der Ausfallwahrscheinlichkeit und/oder der theoretischen Restlebensdauer einer Gleitringdichtung (7) für die Abdichtung gegen ein Medium zwischen einem rotierenden Bauteil (8) und einem stationären Bauteil (9), wobei
der Druck (4) des Mediums und die Temperatur (3) des Mediums, sowie insbesondere die Temperatur (6) von Elementen der Gleitringdichtung (7) und/oder insbesondere der Leckagedruck (5) und/oder insbesondere die Feuchtigkeit auf der dem Medium abgewandten Seite der Gleitringdichtung gemessen werden,
die Messwerte mit bekannten Vergleichswerten verglichen werden,
und aus der Abweichung der gemessenen Werte von den bekannten Vergleichswerten die Ausfallwahrscheinlichkeit und/oder die verbleibende Restlebensdauer errechnet wird, wobei die Ausfallwahrscheinlichkeit erhöht bzw. die Restlebensdauer stärker als die tatsächliche Betriebszeit verringert wird, wenn ein Messwert die Vergleichswerte überschreitet oder wenn ein Messwert sich den Vergleichswerten annähert.

2. Verfahren nach Anspruch 1, **dadurch gekennzeichnet, dass** der Verschleiß der Dichtflächen gemessen und mit vorbestimmten Vergleichswerten verglichen wird und aus dem Erreichen der Vergleichswerte die Ausfallwahrscheinlichkeit und/oder die verbleibende Restlebensdauer errechnet wird.

3. Verfahren nach einem der Ansprüche 1 oder 2, **dadurch gekennzeichnet, dass** die Ausfallwahrscheinlichkeit überproportional erhöht bzw. die Restlebensdauer überproportional stärker als die tatsächliche Betriebszeit verringert wird, wenn zeitgleich mehrere Messwerte die Vergleichswerte überschreiten.

4. Verfahren nach einem der vorherigen Ansprüche, **dadurch gekennzeichnet, dass** die Messwerte periodisch erfaßt werden.

5. Verfahren nach Anspruch 4, **dadurch gekennzeichnet, dass** die Messwerte in Zeitabständen von 0,5 bis 10 Sekunden, vorzugsweise von 1 bis 2 Sekunden, erfasst werden.

6. Verfahren nach einem der vorherigen Ansprüche, **dadurch gekennzeichnet, dass** die Messdaten in einem Datenspeicher speicherbar und, vorzugsweise in Abhängigkeit von der Zeit oder von den Betriebsstunden oder nach bestimmten Messwertbereichen gestaffelt, abrufbar sind.

7. Verfahren nach einem der vorherigen Ansprüche, **dadurch gekennzeichnet, dass** wenn die Ausfallwahrscheinlichkeit einen vorbestimmten Wert überschreitet oder die verbleibende Restlebensdauer einen vorbestimmten Wert unterschreitet das die Gleitringdichtung (7) enthaltende Aggregat automatisch abgeschaltet wird.

## Claims

1. A method for determining the probability of failure and/or the theoretical residual lifetime of a mechanical face seal (7) for sealing against a medium between a rotating member (8) and a stationary member (9), wherein
the pressure (4) of the medium and the temperature (3) of the medium, and particularly the temperature (6) of components of the mechanical face seal (7) and/or particularly the leakage pressure (5) and/or particularly the moisture at the side of the mechanical face seal remote from the medium are measured,
the measured values are compared with known comparison values,
and the probability of failure and/or the remaining residual lifetime is calculated from the deviation between the measured values and the known comparison values,
wherein the probability of failure is increased or the residual lifetime is reduced to a greater extent than the actual operational time if a measured value exceeds the comparison values or if a measured value approaches the comparison values.

2. The method according to claim 1, **characterized in that** wear of the sealing faces is measured and compared with predetermined comparison values and the probability of failure and/or the remaining residual lifetime is calculated from attainment of the comparison values.

3. The method according to claim 1 or 2, **characterized in that** the probability of failure is increased over-proportionally or the residual lifetime is reduced over-proportionally to a greater extent than the actual operational time if a plurality of the measured values simultaneously exceed the comparison values.

4. The method according to any of the preceding claims, **characterized in that** the measured values are taken periodically.

5. The method according to claim 4, **characterized in that** the measured values are taken at time intervals of 0.5 to 10 seconds, preferably of 1 to 2 seconds.

6. The method according to any of the preceding claims, **characterized in that** the measured data are adapted to be stored in a data store and are adapted to be read-out, preferably in dependence on the time or on the operational hours or according to certain ranges of the measured values.

7. The method according to any of the preceding claims, **characterized in that** the aggregate containing the mechanical face seal (7) is switched off automatically if the probability of failure exceeds a prdetermined value or the remaining residual lifetime falls below a predetermined value.

## Revendications

1. Procédé pour déterminer la probabilité de défaillance et/ou la durée de vie résiduelle théorique d'une garniture mécanique d'étanchéité (7) pour l'étanchement vis-à-vis d'un fluide entre un élément rotatif (8) et un élément stationnaire (9), selon lequel
on mesure la pression (4) du fluide et la température (3) du fluide, ainsi que notamment la température (6) d'éléments de la garniture mécanique d'étanchéité (7) et/ou notamment la pression de fuite (5) et/ou notamment l'humidité sur le côté de la garniture mécanique d'étanchéité qui est opposé au fluide,
on compare les valeurs de mesure à des valeurs de référence connues,
et on calcule la probabilité de défaillance et/ou la durée de vie résiduelle restante d'après l'écart entre les valeurs de mesure et les valeurs de référence connues,
la probabilité de défaillance étant augmentée, ou encore la durée de vie résiduelle étant diminuée plus fortement que la durée de service effective, si une valeur de mesure dépasse les valeurs de référence ou si une valeur de mesure s'approche des valeurs de référence.

2. Procédé selon la revendication 1, **caractérisé en ce qu'**on mesure l'usure des surfaces d'étanchéité et on la compare à des valeurs de référence prédéfinies, et on calcule la probabilité de défaillance et/ou la durée de vie résiduelle restante d'après l'atteinte des valeurs de référence.

3. Procédé selon la revendication 1 ou 2, **caractérisé en ce qu'**on augmente la probabilité de défaillance de manière surproportionnelle, ou encore on diminue la durée de vie résiduelle d'une manière surproportionnellement plus forte que la durée de service effective, si plusieurs valeurs de mesure dépassent en même temps les valeurs de référence.

4. Procédé selon l'une des revendications précédentes, **caractérisé en ce qu'**on relève périodiquement les valeurs de mesure.

5. Procédé selon la revendication 4, **caractérisé en ce qu'**on relève les valeurs de mesure à des intervalles de temps de 0,5 à 10 secondes, de préférence de 1 à 2 secondes.

6. Procédé selon l'une des revendications précédentes, **caractérisé en ce que** les données de mesure peuvent être mémorisées dans une mémoire de données et peuvent être interrogées en étant de préférence classées en fonction du temps ou des heures de service, ou selon des plages données de valeurs de mesure.

7. Procédé selon l'une des revendications précédentes, **caractérisé en ce que**, si la probabilité de défaillance dépasse une valeur prédéfinie ou si la durée de vie résiduelle restante tombe en dessous d'une valeur prédéfinie, l'équipement contenant la garniture mécanique d'étanchéité (7) est automatiquement désactivé.
